**Europäisches Patentamt**

**European Patent Office**

**Office européen des brevets**

(11) Veröffentlichungsnummer: **0 512 660 A1**

# (12) EUROPÄISCHE PATENTANMELDUNG

(21) Anmeldenummer: **92250106.9**

(22) Anmeldetag: **05.05.92**

(51) Int. Cl.5: **A62D 3/00**

(30) Priorität: **08.05.91 DE 4115435**

(43) Veröffentlichungstag der Anmeldung:
**11.11.92 Patentblatt 92/46**

(84) Benannte Vertragsstaaten:
**AT BE CH DE DK ES FR GB GR IT LI LU MC NL PT SE**

(71) Anmelder: **BC BERLIN-CONSULT GmbH**
**Ernst-Reuter-Platz 10**
**W-1000 Berlin 10(DE)**

(72) Erfinder: **Watermann, Klaus-Jürgen**
**Friedrich-Franz-Strasse 38**
**W-1000 Berlin 42(DE)**
Erfinder: **Strüven, Gunter**
**Hausotterstrasse 95**
**W-1000 Berlin 51(DE)**
Erfinder: **Dahn, André**
**Jungfernheideweg 33**
**W-1000 Berlin 13(DE)**

(74) Vertreter: **Wablat, Wolfgang**
**Patentanwalt Dr.-Ing. Dr. jur. Dipl.-Chem. W.**
**Wablat Potsdamer Chaussee 47**
**W-1000 Berlin 38(DE)**

(54) **Verfahren und Anlage zur kombinierten chemisch-biologischen Entsorgung von Explosivstoffen und explosivstoffhaltigen Reststoffen.**

(57) Die vorliegende Erfindung betrifft ein Verfahren und eine Anlage zur kombinierten chemisch-biologischen Entsorgung von Explosivstoffen und explosivstoffhaltigen Reststoffen. Durch die Erfindung wird erstmals ein Verfahren und eine Anlage zur Verfügung gestellt, die im Gegensatz zu derzeitigen Entsorgungsverfahren das Freisetzen von luft-, boden- oder wassergefährdenden Stoffen weitgehend ausschließen und bei geringem Investitionsaufwand kostengünstig betrieben werden können.

Die in dem erfindungsgemäßen Verfahren bzw. Anlage anfallenden Reststoffe können als Bodenverbesserer oder als Brennmaterial verwendet werden.

EP 0 512 660 A1

Die vorliegende Erfindung betrifft ein Verfahren und eine Anlage zur kombinierten chemisch-biologischen Entsorgung von Explosivstoffen und explosivstoffhaltigen Reststoffen.

Bei Schießpulver und Sprengstoffen handelt es sich in erster Linie um organische Nitroverbindungen, wobei insbesondere die Nitroaromaten und deren Folgeprodukte aus chemischen oder biologischen Zersetzungsreaktionen aufgrund ihrer cancerogenen Wirkung als Problemstoffe anzusehen sind.

Die sicherheitstechnischen Anforderungen bei der Entsorgung dieser Stoffe sind sehr hoch. Dementsprechend ist ein Verfahren notwendig, welches

- einen störungsfreien und risikolosen Betrieb gewährleistet,
- einen weitgehenden Abbau der oben genannten Problemstoffe sicherstellt und
- sich durch geringen Schadstoffausstoß auszeichnet.

Für die Entsorgung von Schießpulver und Sprengstoffen bieten sich

- thermische,
- naß-chemische und
- bio-chemische

Verfahren an.

Bei herkömmlichen thermischen Entsorgungsverfahren werden hohe Anforderungen an die notwendige Rauchgasreinigung gestellt. Die Schieß- und Sprengstoffe enthalten hohe Gewichtsanteile an Stickstoff und Sauerstoff. Diese führen bei der Verbrennung - dies gilt auch bei vorgeschalteter Druckvergasung mit Nachverbrennung - und in geringerem Maße bei der pyrolytischen Zersetzung mit anschließender Verbrennung zu einem hohen Stickoxidgehalt im Rauchgas. Der Einsatz einer Denox-Stufe ist aus diesem Grund erforderlich. Da jedoch durch die erforderliche Filteranlage die Verbrennungsanlage als abgeschlossen anzusehen ist, ist die Betriebssicherheit der Gesamtanlage insbesondere der RGA bei auftretenden Druckstößen bei reiner Verbrennung des Sprengstoffes nicht gewährleistet. Folglich bietet sich eine thermische Entsorgung entweder nur unter Verschneidung mit anderen Brennstoffen oder in einer Verbrennung mit leichtem Überdruck an. Somit stellen die thermischen Verfahren einen hohen apparativen Aufwand mit entsprechend hohem Investitionsaufwand dar. Von Vorteil ist eine Abwärmenutzung aus dem Verbrennungsprozeß.

Die naß-chemischen Entsorgungsverfahren stellen zwar aufgrund ihres wäßrigen Arbeitsmediums eine zusätzliche Sicherheitsmaßnahme dar, sind aber mit hohen Betriebskosten für die Chemikalien verbunden. Eine Nutzung der in dem Schießpulver enthaltenen Energie erfolgt mit geringerem Wirkungsgrad als bei thermischen Verfahren. Des weiteren fällt beim naß-chemischen Verfahren ein Abwasser mit hohem Nitratgehalt an, welches bei der Einleitung zusammen mit Phosphaten zur Eutrophierung der Gewässer beiträgt.

Im Zuge der derzeitigen Entwicklung sind im Rahmen der weltweiten Abrüstungsmaßnahmen in der Bundesrepublik Deutschland Lösungen zur Delaboration der aus der Auflösung der NVA anfallenden Munition und der überalteten Munitionsbestände aus der Bundeswehr und der Alliierten sowie zur umweltverträglichen Entsorgung der aus der Delaboration anfallenden Abfälle erforderlich. Bei der Delaboration der Munition fallen große Mengen an Treibmittel und andere Explosivstoffe an. Die bisher im Laufe der letzten Jahrzehnte gängige "Entsorgungsmethode", die bei der Produktion aus der Rüstungsindustrie anfallenden Überschüsse oder überalteten Lagerbestände entweder auf Halden zu verkippen (z. B. "Trihalden" in Stadtallendorf, Elsnig b. Torgau und Klausthal-Zellerfeld) und mit Erde zuzuschütten bzw. als Haufwerk in einer Sammelschale offen zu verbrennen, sollte zukünftig keine Anwendung mehr finden, da hierbei die Freisetzung von Stickoxiden und Cyaniden in die Abluft sowie die Belastung von Böden und Grundwässer mit cancerogenen und mutagenen Stoffen wie TNT, DNT, Diphenylamine, Hexa, Nitrosodiphenylamine, Aminobenzole, etc. nicht zu vermeiden ist und die Folgekosten für eine anschließende Sanierung der kontaminierten Flächen zu hoch sind. Versuche zur umweltgerechten Entsorgung von Explosivstoffen und explosivstoffhaltigen Reststoffen sind meist nur im Labormaßstab durchgeführt worden und haben nur in einigen Fällen den Technikumsmaßstab oder großtechnischen Maßstab erreicht.

Einige thermische Verfahren, in denen beispielsweise in einer Wirbelschichtfeuerung eines Kraftwerkes in Dresden die Explosivstoffe durch Verschneiden mit dem Brennmaterial entsorgt werden, sind nach bundesdeutschem Umweltrecht nur bedingt genehmigungsfähig. Eine Ausnahme stellt bislang die auf Bundeswehrgelände betriebene thermische Kampfstoffentsorgungsanlage in Munster dar, bei der ein Genehmigungsverfahren nach 17. BImSchG nicht durchgeführt wurde. In dieser Anlage soll neben Kampfstoffen auch ein Teil der Explosivstoffe mit entsorgt werden.

Bei der Erweiterung der Anlage wird jedoch ein entsprechendes Genehmigungsverfahren erforderlich.

Das Ziel der Erfindung besteht darin, erstmals ein Verfahren und eine Anlage zur kombinierten chemisch-biologischen Entsorgung von Explosivstoffen oder explosivstoffhaltigen Reststoffen zur Verfügung zu stellen, die im Gegensatz zu derzeitigen Entsorgungsverfahren das Freisetzen von luft-, boden- oder wassergefährdenden Stoffen weitgehend ausschließen und bei geringem Investitionsaufwand kostengünstig betrieben werden können.

Der Erfindung liegt die Aufgabe zugrunde, ein chemisch-biologisches Verfahren und eine Anlage zur Beseitigung und Entsorgung von Explosivstoffen und explosivstoffhaltigen Reststoffen zu schaffen, wobei die unmittelbare Gefährdung der Bevölkerung durch Explosion der oben genannten Stoffe oder Freisetzung der darin enthaltenen toxischen Substanzen in die Umwelt infolge unsachgemäßer Lagerung, Handhabung oder Entsorgung durch eine für diese Stoffe gemäß derzeit geltenden Umweltrecht nicht genehmigungsfähigen Anlage vermieden werden können.

Gegenstand der Erfindung ist ein Verfahren zur kombinierten chemisch-biologischen Entsorgung von Explosivstoffen und explosivstoffhaltigen Reststoffen, das sich durch folgende Verfahrensschritte auszeichnet:

a) Lagerung der Explosivstoffe aus der Delaboration oder Überschußproduktion oder die bei einer Sanierung von Rüstungsaltlasten evtl. anfallenden explosivstoffhaltigen Reststoffe in einem Speicherbehälter als ein als wäßrige Suspension vorliegendes Explosivstoffgemisch,

b) Hydrolyse der in der Suspension vorliegenden Inhaltsstoffe nach Zugabe von Säure, Lauge oder Enzymen, Zerlegung der hochmolekularen organischen Stoffe in niedermolekulare organische und anorganische Bestandteile, die in der Prozeßlösung leichter löslich sind und somit in der nachgeschalteten biologischen Stufe effektiver behandelt werden können, der Betriebsbereich liegt je nach Einsatzstoff und Betriebsmittel zwischen 30 °C und 0,2 bar (optimale Enzymaktivität in diesem Temperaturbereich bei Aufschluß von Nitrozellulose durch Zellulose) bis zum kritischen Punkt des Prozeßwassers bei 374 °C und 221 bar, die Abtrennung kolloidal vorliegender hochmolekularer Hydrolyserestprodukte mit einer entsprechenden Trennvorrichtung, hierbei anfallenden Konzentrate werden der Hydrolysestufe wieder zugeführt und Inertstoffe aus dem Prozeß ausgeschleust,

c) die während der Hydrolyse unter Umständen auftretenden Abgase werden absorptiv, adsorptiv oder chemisorptiv gereinigt, die dabei anfallenden Schadstoffkonzentrate werden in die biologische Behandlungsstufe geleitet,

d) die durch die Hydrolyse entstandenen organischen Verbindungen sowie die infolge der Freisetzung von funktionellen Gruppen in Lösung gegangenen anorgannischen Bestandteile wie Nitrit oder Nitrat, dienen, nach einer ensprechend vorgegebenen Verdünnung, in einem anoxisch geführten biologischen Abbauprozeß als Substrat und/oder als Sauerstoffquelle für die Mikroorganismen, die Sauerstoffdonatoren Nitrit und Nitrat werden durch eine enzymatische Reduktion in erster Linie in reinen Stickstoff überführt (Denitrifikation) und nur zu einem geringen Anteil in Ammonium oder Ammoniak umgewandelt (Ammonifikation), der hierdurch freigesetzte Sauerstoff dient den Mikroorganismen zur Oxidation der organischen Inhaltsstoffe in der Prozeßlösung, das in diesem biologischen Abbauprozeß entstehende Abgas ist nahezu frei von toxischen Substanzen (Stickoxide) und setzt sich weitgehend aus den Inertgasen $N_2$ und $CO_2$ zusammen,

d) der Nitrit- bzw. Nitratüberschuß in der Prozeßlösung kann nach Zugabe von weiteren Trägern von organischen Verbindungen (Cosubstrat) wie

- kommunales Abwasser,
- Naßmüll,
- Überschußschlamm einer kommunalen Kläranlage,
- Abwässer oder Abfälle aus der Lebensmittelindustrie oder
- organisch belastete Grundwasser

wiederum mikrobiell umgesetzt werden,

f) die schwer abbaubaren organischen Inhaltsstoffe, die in der anoxischen biologischen Stufe nicht mikrobiell umgesetzt werden konnten, werden in einer aeroben biologischen Stufe mineralisiert, in der gleichzeitig eine vollständige Nitrifikation erfolgt, das Prozeßwasser weist am Ablauf des aerob betriebenen Bioreaktors nahezu kein Nitrit und Ammoniak auf,

g) in der nachgeschalteteten Vorrichtung erfolgt die Abtrennung kolloidal vorliegender Biomasse und hochmolekularer Hydrolyserestprodukte sowie deren Rückführung in die vorgenannte Hydrolysestufe oder Behandlung in einer weiteren biologischen anaeroben Vergärungsstufe,

h) photochemische oder rein chemische Behandlung des Ablaufs aus der aeroben biologischen Stufe sowie eine weitere biologische Nachbehandlung, eine Abtrennung der persistenten Organika durch eine nachgeschaltete Adsorptions- oder Absorptionsstrecke, eine Schlammentwässerung des Überschußschlamms aus allen oben genannten biologischen Stufen, eine Filtratabwasserrückführung zur Entsorgungsanlage und eine biologische Stabilisierung des teilentwässernten Schlammes (sofern erforderlich) oder eine direkte thermische Weiterbehandlung in einer Pyrolyse oder einer Verbrennung,

i) weitgehende Wiederverwendung des Prozeßwassers für die Verdünnung der anfallenden konzentrierten Lösungen aus der Hydrolysestufe.

Besonders bevorzugte Ausführungsformen des erfindungsgemäßen Verfahrens sind dadurch gekennzeichnet,

- daß die bei der Hydrolyse frei werdende Wärmeenergie innerhalb der Anlage für die Beheizung anderer Verfahrensstufen genutzt wird,
- daß eine nach Salzgehalt gesteuerte Prozeßwasserkreislaufführung zur Zwischenspeicherung des Prozeßwassers gegeben ist,
- daß die anfallenden Konzentrate und Regenerate aus den zur Aufbereitung der Prozeßlösung eingesetzten physikalischen Trennverfahren zwischengelagert und in den biologischen oder chemischen Behandlungsstufen nochmals behandelt werden,
- daß das Verfahren in Kombination oder parallel zu einer kommunalen Kläranlage, einer Industriekläranlage oder einer Müllvergärungsanlage betrieben wird,
- daß aus einem Einsatzstoff mit hohem Stickstoffmassenanteil ein weitgehend von Stickstoffen befreites organisches Restprodukt anfällt,
- daß als Cosubstrat Zucker, Melasse, andere Rückstände aus der Lebensmittelindustrie, Naßmüll, kommunales oder organisch verschmutztes Industrieabwasser, mit organischen Verbindungen kontaminiertes Grundwasser und Filtratabwasser aus den kommunalen Kläranlagen eingesezt werden.

Ein weiterer Gegenstand der Erfindung ist eine Anlage zur Durchführung des Verfahrens zur kombinierten chemisch-biologischen Entsorgung von Explosivstoffen und explosivstoffhaltigen Reststoffen mit einem Oxidationsreaktor mit nachgeschaltetem Bioreaktor und/oder nachgeschalteter Absorberharzkolonne zur weitgehenden Abreinigung chemisch und biologisch vorbehandelter Schießpulverlösungen, mit mehreren Bioreaktoren zur kombinierten anoxischen, aeroben und/oder anaeroben Behandlung der chemisch hydrolysierten Explosivstoffsuspensionen, mit mehreren parallel und in Reihe schaltbaren Autoklaven als ein ein- oder mehrstufiges Hydrolyseverfahren, die sich dadurch auszeichnet, daß eingangsseitig der Explosivstoff und der explosivstoffhaltige Reststoff vorzerkleinert als wäßrige Suspension über eine Transportvorrichtung oder -leitung nach Zwischenlagerung der Hydrolysestufe zugeführt wird, daß als 1. Hydrolysestufe ein Reaktor für einen Betriebsdruck wahlweise von 0,2 bis 221 bar und bei Temperaturen zwischen 50 ° bis 374 ° C eingesetzt wird, daß der nicht hydrolysierte Rückstand über eine Feststofftrennvorrichtung von der wäßrigen Lösung separiert und der Hydrolysestufe wieder zugeführt wird, daß filtratseitig zur Nitrit- und Nitratelimination ein ein- oder mehrstufiges anoxisches biologisches Verfahren eingesetzt wird, in der infolge der Denitrifikation eine weitgehende Veratmung der gelösten organischen niedermolekularen Hydrolyseproduktion erfolgt, daß für die einzelnen anoxisch, aerob und anaerob betriebenen Bioreaktoren eine Heizvorrichtung vorgesehen ist, mit der die Betriebstemperaturbereiche zwischen 15 ° bis 65 ° C gefahren werden können, daß hinter der anoxischen biologischen Stufe für die Rückhaltung der denitrifizierenden Bakterien im Reaktor eine Vorrichtung zur Biomassensaperation vorgesehen ist, daß im Anschluß der klarwasserführende Anteil zur weitgehenden Mineralisation der schwer abbaubaren organischen Inhaltsstoffe einer weiteren aeroben und/oder anaeroben Behandlung in einem Bioreaktor oder mehreren hintereinandergeschalteten Bioreaktoren unterzogen wird, daß im Ablauf der vorgenannten biologischen Stufe, im Fall hoher Restkonzentrationen an persistenten oder an nur in den vorgeschalteten Reaktorstufen nicht behandelbaren organischen Substanzen, über eine Trennvorrichtug der organische Anteil mit mittlerem und hohem Molekulargewicht nahezu vollständig aus der Prozeßlösung entfernt und als Konzentrat entweder in die Hydrolysestufe zurückgeführt oder nach einer biologischen Vergärung zu niedermolekularen Verbindungen als Cosubstrat in die anoxische biologische Stufe zurückgeführt wird und der von Organika abgereicherte Anteil nach weiterer Behandlung als Abwasser aus dem Prozeß ausgeschleust wird.

Besonders bevorzugte Ausführungsformen der erfindungsgemäßen Anlage sind dadurch gekennzeichnet,

- daß eingangsseitig zum Hydrolysereaktor zur Ergänzung der Suspension eine oder mehrere Dosiervorrichtungen für Laugen, Säuren und Enzyme einschließlich der entsprechenden Bevorratung vorgesehen sind,
- daß der für den Hydrolyseprozeß optimale Stoffaustausch leistungseintragsreguliert über eine entsprechende mechanische Mischvorrichtung sowie die Massenstromregulierung des Einsatzstoffes über Temperaturmessung gesteuert wird,
- daß jeder einzelne Hydrolysereaktor zur Prozeßoptimierung in einen anderen Druck- , Temperatur- und pH-Wertbereich fahrbar ist und eine entsprechende Wärmezufuhr oder -abfuhr durch Wärmetauscher oder Heizvorrichtung erfolgt und die Abwärme für das Inertstoffwaschwasser nutzbar ist,
- daß eine Feststofftrennvorrichtung für die nicht hydrolisierbaren Anteile (Hydrolyserückstand) in der letzten Hydrolysestufe, aus der der Hydrolyserückstand ausgeschleust wird, vorgesehen ist,
- daß für den Hydrolyserückstand eine gesonderte Waschvorrichtung mit Ableitung der Waschwässer in die anoxische oder aerobe biologische Stufe oder in die Hydrolysestufe vorgesehen ist,

- daß zwischen der Hydrolysestufe und der anoxischen biologischen Stufe ein Vorratsbehälter zur Zwischenspeicherung der aufgeschlossenen Explosivstoffe und/oder explosivstoffhaltigen Reststoffe vorgesehen ist,
- daß in dem Denitrifikationsreaktor zur Gewährleistung einer nahezu vollständigen Nitrit- und Nitrat-elimination eine Dosiervorrichtung für unterstützendes Cosubstrat vorgesehen ist,
- daß für mindestens eines der Cosubstrate eine entsprechende Dosiervorrichtung vorgesehen ist,
- daß der Leistungseintrag für die Durchmischung in dem Reaktor der anoxischen Stufe entweder über Flüssigkeitsumlauf oder Einblasen des Überschußstickstoffes aus der Denitrifikation erfolgt und für das überschüssige Stickstoffgas eine Zwischenspeicherung in einem gesonderten Behältnis vorgesehen ist,
- daß in dem aeroben Bioreaktor neben einer Mineralisierung der restlichen organischen Inhaltsstoffe eine weitgehende Nitrifikation erfolgt und ein nitratreicher Ablaufteilstrom durch Kreislaufführung der vorgeschalteten anoxisch betriebenen Stufe als gasfreie Sauerstoffversorgung vorgesehen ist,
- daß für alle Bioreaktoren jeweils Dosiervorrichtungen für Spurenelemente und Nährsalze und mechanische Vorrichtungen zur Schaumbekämpfung vorgesehen sind,
- daß zur weiteren Behandlung des anfallenden Abwassers ein chemischer Oxidationsreaktor, der einer Umwandlung oder Mineralisation niedermolekularer persistenter Organiken und Anorganiken dient, vorgesehen ist,
- daß für die evtl. entstehenden Restprodukte im Abwasser eine biologische Nachbehandlung in einem Biofestbettumlaufreaktor erfolgt und, sofern diese nicht ausreichend ist, als Sicherheitsstufe eine Adsorptions- oder Absorptionsstrecke vorgesehen ist,
- daß für Abwasser mit hohem Salzgehalt eine Umkehrosmosestufe, bei der das Konzentratvolumen über eine nachgeschaltete ein- oder mehrstufige Verdampferanlage auf das Feststoffvolumen reduziert und das Permeat sowie das Brüdenkondensat als Prozeßwasser der Hydrolysestufe zurückgeführt wird, vorgesehen ist,
- daß neben der Abwasserreinigungsvorrichtung ein Pflanzenklärverfahren als Restreinigungsstufe vorgesehen ist,
- daß zur Zwischenspeicherung der in der Adsorptions- oder Absorptionsstufe anfallenden Regenerate ein Regeneratbehälter, in dem die Regenerate über eine Rücklaufleitung eingeleitet werden und durchflußkontrolliert über den Hauptvolumenstrom der chemischen Oxidationsstufe zugeführt werden, vorgesehen ist,

- daß der Leistungseintrag im chemischen Oxidationsreaktor mit Hilfe der durch die Kreislaufpumpe erfolgten Umwälzung erreicht wird, wobei in der Umlaufleitung eine Dosierung des Oxidationsmittels (Ozon, $H_2O_2$) oder die Umwälzung direkt durch Eintrag ozonhaltiger Luft oder ozonhaltigen Sauerstoffgases erfolgt,
- daß zwischen dem Ablauf des aeroben Bioreaktors und einer nachgeschalteten chemischen Oxidationsstufe zur Rückhaltung der kolloidal gelösten Wasserinhaltsstoffe eine Filtrationsvorrichtung, deren filtratseitiger Ablauf zur feststofffreien Behandlung im Oxidationsreaktor zugeführt wird, vorgesehen ist,
- daß zur direkten Rückführung des konzentratseitigen Ablaufes aus der Filtrationseinrichtung in die Hydrolysestufe eine Rücklaufleitung vorgesehen ist,
- daß die hochmolekularen organischen Anteile im konzentratseitigen Ablauf der Filtrationseinrichtung durch einen anaeroben Bioreaktor im mesophilen oder thermophilen Temperaturbereich weiterbehandelt werden, wobei die entstehenden niedermolekularen organischen Bestandteile in Form von Biogas zur Energienutzung oder als Cosubstrat zur Versorgung des anoxisch betriebenen Bioreaktors einsetzbar sind.

Wiederum eine weitere bevorzugte Ausführungsform der erfindungsgemäßen Anlage ist gekennzeichnet durch

a) eine Vorzerkleinerungsvorrichtung zur Behandlung der grobteiligen Explosivstoffe und explosivstoffhaltigen Reststoffe zur Vergrößerung der reaktiven Oberfläche,

b) einen oder mehrere nachgeschaltete Autoklaven, in denen im Temperaturbereich zwischen 30 ° bis 374 °C und einem Druckbereich zwischen 0,2 bis 221 bar nach Zugabe von Lauge oder Säure ein Aufschluß (Hydrolyse) und zum Teil eine Umwandlung der Explosivstoffe und explosivstoffhaltigen Reststoffe in andere niedermolekulare organische und anorganische Bestandteile erreicht wird,

c) eine nachgeschaltete Feststofftrennvorrichtung zur Rückführung der nicht hydrolysierten Bestandteile in die Hydrolysestufe,

d) eine nachgeschaltete biologische Behandlung, bestehend aus im mesophilen Temperaturbereich anoxisch betriebenen Bioreaktoren, einer Vorrichtung zur Biomassenseparation und im mesophilen Temperaturbereich aerob oder anaerob betriebenen Bioreaktoren,

e) eine nachgeschaltete Trennvorrichtung für die nicht biologisch abgebauten hochmolekularen organischen Anteile aus dem Prozeßwasser,

f) einen filtratseitig nachgeschalteten Oxidationsreaktor für die chemisch oxidative Behandlung der niedermolekularen persistenten Organiken,

g) einem dem Oxidationsreaktor nachgeschalteten Bioreaktor zur mikrobiellen Nachbehandlung des chemisch vorbehandelten Filtrats,

h) eine daran anschließende Adsorptions- oder Absorptionsvorrichtung zur Elimination der restlichen organischen Bestandteile aus dem Ablauf des Biorektors,

i) eine Rücklaufleitung für die weitere Nutzung des Ablaufwassers der Adsorptions- oder Absorptionskolonne als Prozeß- und Transportwasser,

j) eine pH-Kontrollvorrichtung für das Abwasser vor Ableitung in den Vorfluter,

k) einen konzentratseitig nachgeschalteten anaeroben Bioreaktor, der zur weitgehenden Vergärung der hochmolekularen organischen Bestandteile im mesophilen oder thermophilen Temperaturbereich eingesetzt wird und

l) eine schlammseitig nachgeschaltete Behandlung des bei der biologischen Behandlung anfallenden Überschußschlamms, bestehend aus Schlammentwässerung sowie Aufbereitung und Kompostierung oder Verbrennung.

Eine andere bevorzugte Ausführungsform der erfindungsgemäßen Anlage ist dadurch gekennzeichnet,

- daß bei einer H$_2$S-Bildung im Reaktor die in der Denitrifikationsstufe anfallenden Abgase zur Sicherheit direkt oder über einen Eisenoxidfilter in den aeroben Bioreaktor geführt werden, wobei der Eisenoxidfilter im Bypass geschaltet ist.

Von erheblicher Bedeutung im Rahmen der Erfindung ist die Verwendung der nach dem erfindungsgemäßen Verfahren und der erfindungsgemäßen Anlage hergestellten stickstoffarmen Überschußschlämme und der restlichen hochmolekularen organischen Inhaltsstoffe des Prozeßwassers

- als Bodenverbesserer oder Kompostzusatz für die Land- oder Forstwirtschaft nach einer Stabilisierung und einer mechanischen Entwässerung oder thermischen Trocknung,
- als energielieferndes stickstoffarmes Brennmaterial für Kraft- oder Heizwerke,
- als energielieferndes Biogas nach einer Behandlung in einer anaeroben Vergärungsstufe oder
- als für die Denitrifikationsstufe nutzbares Cosubstrat in Form von niedermolekularen organischen Verbindungen nach einer Behandlung in einer anaeroben Vergärungsstufe,

sowie des anfallenden Graphits als energielieferndes stickstoffarmes Brennmaterial für Kraft- oder Heizwerke.

Die erfindungsgemäße Lösung zeichnet sich also dadurch aus, daß die zu entsorgenden Explosivstoffe bzw. explosivstoffhaltigen Reststoffe als Maßnahme zur Gefahrenabwehr nur in einer wäßrigen Phase oder in ständig angefeuchtetem Zustand gelagert werden, daß die Explosivstoffe bzw. explosivstoffhaltigen Reststoffe nach einer Vorzerkleinerung (beispielsweise durch ein Kegelmahlwerk), sofern erforderlich, als wäßrige Suspension in einen Autoklaven gefördert werden, daß die hochmolekularen organischen Bestandteile nach Zugabe von Säure, Lauge oder Enzymen in einem Autoklaven bei einer Temperatur zwischen 30 ° und 240 °C im Druckbereich zwischen 0,2 und 32 bar hydrolysiert und die verbleibenden nicht hydrolysierten hochmolekularen organischen Verbindungen (wie nicht reagierte Nitrozellulose oder nicht gelöste denitrierte Zellulosereste) nach einer Filtration (beispielsweise Feinfilter) konzentratseitig wieder in dem Hydrolyseprozeß zurückgeführt sowie verbleibende Inertanteile (wie beispielsweise Graphit bei der Entsorgung von Treibmitteln aus Kleinkaliber- und Infanteriemunition oder ausgefällte Karbonate aus dem im Kreislauf geführten Prozeßwasser) aus dem Hydrolyseprozeß ausgeschleust und gewaschen sowie die Waschwässer wieder in die Entsorgungsanlage zurückgeführt werden, daß filtratseitig die niedermolekularen organischen und anorganischen Verbindungen, die durch den Hydrolyseprozeß entstanden sind (wie aliphatische und cyclische Alkane, Alkohole, Aldehyde, Zucker sowie Nitrite und Nitrate, etc.), sowie die bereits als Stabilisatoren oder Zusatzstoffe im Explosivstoff enthaltenen wassergefährdenden Substanzen (wie beispielsweise TNT, DNT, Diphenylamin, etc.), zunächst, nach einer Verdünnung mit dem aus dem Ablauf der Gesamtanlage entnommenen und im Kreislauf geführten Prozeßwasser, in einem anoxischen Bioreaktor durch fakultativ anaerobe und heterotrophe Mikroorganismen weitgehend zu N$_2$, CO$_2$, und Überschußbiomasse metabolisiert werden, daß die im anoxisch betriebenen Bioreaktor verbleibenden niedermolekularen organischen Inhaltsstoffe in einem nachgeschalteten aeroben Bioreaktor durch aerob heterotrophe Mikroorganismen abgebaut werden, daß gelöste höhermolekulare Organika, freigesetzt aus der Bakerienlysis, anschließend über eine weitere Filtrationsstufe (beispielsweise Ultrafiltration) konzentratseitig allein oder gemeinsam mit dem Überschußschlamm aus den anoxisch bzw. aerob betriebenen Bioreaktoren nach Vergärung in einem aeroben Bioreaktor (beispielsweise Up-flow-Reaktor) dem anoxisch betriebenen Reaktor als Cosubstrat zurückgeführt oder direkt in den Hydrolysereaktor zurückgeleitet werden, daß der filtratseitige Ablauf des Prozeßwassers chemisch oxidativ (z. B. Ozon oder $H_2O_2$) in einem Reaktor (z. B. Schlaufenreaktor) und, sofern erforderlich, biologisch in einem Bioreaktor (z. B. Festbettumlaufreaktor) und physikalisch über eine Adsorptions- oder Absorptionskolonne nachbehandelt wird. Von den sowohl wasserseitig als auch feststoffseitig anfallenden Restprodukten aus der Anlage geht für Wasser, Boden oder Luft kein Gefährdungspotential aus.

Die Lagerung der Explosivstoffe und der explosivstoffhaltigen Reststoffe in feuchtem Zustand bzw. in einer wäßrigen Phase bewirkt auf Grund einer weitaus geringeren Explosionsgefahr eine Senkung des Gefahrenpotentials. Des weiteren lassen sich die oben genannten Stoffe bei einer evtl. erforderlichen Vorzerkleinerung von Grobmaterial durch ein Mahlwerk sicherer behandeln. Unkontrollierbare Verpuffungsreaktionen bei der mechanischen Behandlung infolge von örtlichen Überhitzungen im Mahlwerk können vermieden werden. Als Vorzerkleinerungsstufe sind verschiedene Arten von Brechern (z. B. Kegelbrecher, Walzenbrecher) oder Häcksler denkbar. Durch die Vorzerkleinerung wird die reaktive Oberfläche der zu hydrolysierenden Stoffe erhöht und der bei der Hydrolyse erforderliche Chemikalienverbrauch gesenkt. Das entstehende Feinmaterial kann entweder direkt in die Hydrolysestufe weitergeleitet werden oder kann in einem Zwischenspeicher bevorratet werden. Da aus dem Feinmaterial bereits niedermolekulare organische und anorganische Bestandteile in die wäßrige Phase in Lösung gehen, treten unter Umständen Geruchsbelästigungen infolge mikrobieller Zersetzung dieser Stoffe auf, die nur durch Verwendung eines abgeschlossenen Behälters vermieden werden kann. Dabei ist es möglich, die Abluft über einen Eisenoxidfilter weiterzubehandeln oder direkt in eine aerobe Behandlungsstufe einzuleiten. Die Transportleitung zum Zwischenspeicher bzw. zur Hydrolysestufe muß je nach Eingangsdruck in der Hydrolysestufe und im Zwischenspeicher als entsprechende Druckrohrleitung ausgelegt sein. Bei Einsatz einer Freifalleitung in einen drucklosen Behälter reicht auch ein offener Kanal aus. Für beide Leitungen gilt jedoch die Voraussetzung einer turbulenten Strömung zur Vermeidung von Ablagerungen im Kanal bzw. Rohr. Als Rohrmaterial für die Zuleitung kann bis zu Temperaturen von 110 °C und Drücken bis 16 bar auch Kunststoff eingesetzt werden. Bei höheren Temperatur- bzw. Druckniveaus sollten Stahl oder Nichteisenmetalle eingesetzt werden. Zwischen dem Anschlußflansch der Transportleitung und der 1. Hydrolysestufe kann ein Wärmetauscher geschaltet sein, um die Abwärme des Hydrolysereaktorablaufs für die Erwärmung des Hydrolysereaktorzulaufs zu nutzen. Der Hydrolysereaktor kann sich beispielsweise aus einem oder mehreren Autoklaven zusammensetzen. Um eine vollständige Vermischung in den Hydrolysestufen zu erreichen, kann der hierfür erforderliche Leistungseintrag entweder über motorisch getriebene Rührer, über Zwangsumlauf der Suspension durch Pumpen oder durch Einblasen von Inertgas erreicht werden. Für die letztgenannte Variante bietet sich vorzugsweise das Überschußgas aus der anoxischen biologischen Stufe an. Unter Umständen ist bei einer autothermen Prozeßführung eine bestimmte Wärmeleistungsabfuhr im Autoklaven zu gewährleisten, um schlagartige Gas- und Energiefreisetzungen zu vermeiden. Im Fall eines gasseitigen Leistungseintrages kann je nach Eintrittsgasvolumenstrom bzw. je nach Gaseintrittstemperatur evtl. der Wärmeverlust aus der Verdampfungswärme ausreichen, um einer Überhitzung vorzubeugen, sofern der Flutpunkt des Reaktors nicht überschritten wird. Ansonsten sind andere Kühlsysteme, wie z. B. Wärmetauscher, im Autoklaven vorzusehen. Die überschüssige Wärmeenergie läßt sich in beiden oben genannten Varianten abführen und in anderen nachgeschalteten Verfahrensstufen weiter nutzen. Mit Hilfe der Hydrolyse werden schwer lösliche und somit mikrobiell schwer verwertbare Organika in leicht lösliche und zum Teil leicht biologisch abbaubare Produkte umgewandelt. Die Hydrolysereaktionen laufen je nach eingestellten pH-Wert und eingestellter Betriebstemperatur unterschiedlich schnell ab. Je nach Art des verwendeten Aufschlußmittels liegen die optimalen Temperatur- und Druckbereiche um 30 ° bis 150 °C bzw. 1 bis 4 bar. Bei der Hydrolyse entstehen in erster Linie Nitrite, Nitrate, niedere aliphatische Kohlenwasserstoffverbindungen und gelöste denitrierte Zellulosereste. Des weiteren verbleiben zum Teil nicht reagierte Nitrozellulosebestandteile und Inertanteile wie Graphit als fester Rückstand in der Lösung, die über eine Trennvorrichtung von der flüssigen Phase getrennt werden müssen. Als Trennvorrichtungen bieten sich neben Schwerkraft- und Zentrifugalabscheidern eine Flotationsstufe, Siebvorrichtungen, Fein- oder Mikrofilter oder auch Kombinationen der vorgenannten Seperationstechnologien an. Eine Schwerkraftabscheidung läßt sich gleichzeitig in einem zwischen Hydrolysestufe und einer beliebigen Filtrationsvorrichtung vorgesehenen Vorratsbehälter durchführen. Hier können die Inertanteile bereits von den ungelösten organischen Bestandteilen abgeschieden werden. Letztere werden erst mit Hilfe einer nachgeschalteten Filtration aus der flüssigen Phase entfernt und als konzentrierte feststoffhaltige Lösung in die Hydrolysestufe zurückgeführt. Im Hinblick auf eine optimale Ausnutzung der Betriebschemikalien, läßt sich der Vorratsbehälter zusätzlich für einen Nachreifeprozeß nutzen, in der aus der vorher in der Hydrolysestufe behandelten Explosionsstoffsuspensionen weitere Feststoffe mit dem Aufschlußmittel reagieren und in Lösung gehen können. Aus der Lösung evtl. entweichende Gase werden über eine Absaugung durch einen Eisenoxidfilter geleitet oder in die aerobe biologische Stufe eingeblasen. Die aus dem Zwischenspeicher entweichende Abluft kann auch über eine Gaswäsche gereinigt werden. Die abgeschiedenen Inertanteile werden nachträglich in einer Waschstufe mit Frischwasser und zugesetzten Säuren oder Laugen von stickstoffhaltigen Substanzen weitgehend befreit und abfiltriert. Die Inertanteile werden in Containern gesammelt und lassen sich als Energieträger in einer Verbrennung ohne zusätzliche Rauchgasreinigung nutzten. Das anfallende Waschwasser wird als Filtratabwasser entweder in die Hydrolysestufe oder in die anoxische biologische Stufe zurückgeführt. Die Inertanteile können auch, sofern keine weitere Wassergefährdung durch diese Stoffe ausgeht, als Filtrierhilfsmittel bei der Überschußschlammentwässerung eingesetzt werden. Das Filtratwasser kann auf Grund der hohen Konzentration an toxisch wirkenden Nitrit nicht in einem aeroben Bioreaktor behandelt werden, da die Stoffwechselaktivität der aeroben Mikroorganismen bei Anwesenheit von Nitrit stark herabgesetzt wird. Aus diesem Grund wird die Lösung zunächst mit dem im Kreislauf geführten Prozeßwasser oder mit anderen Abwasser verdünnt. Die Verdünnung der Lösung richtet sich jedoch in erster Linie nach der maximalen Konzentration von Nitrit, bei der noch keine Abnahme der biologischen Aktivität im Denitrifikationsreaktor auftritt. Anschließend erfolgt zunächst nach einer Neutralisation die Behandlung in einem anoxisch betriebenen Bioreaktor, in dem die gelösten Nitrite und Nitrate für die biochemisch oxidative Umsetzung der organischen Hydrolyseprodukte als Sauerstoffquelle von denitrifizierenden Bakterien genutzt werden können (Denitrifikationsstufe). Somit können gleichzeitig organische und anorganische Wasserinhaltsstoffe metabolisiert werden. Bei diesem biochemischen Prozeß werden die Nitrite und Nitrate weitgehend in molekularen Stickstoff und nur zu geringen Anteil zu intrazellulärer organisch gebundener Stickstoff bzw. durch Ammonifikation in Ammonium/Ammoniak umgewandelt. Die organischen Inhaltsstoffe werden zum einen unter Ausnutzung des im Nitrit bzw. Nitrat gebundenen Sauerstoff zu $CO_2$ veratmet (Katabolismus) und dienen zum anderen als Bausteine für den Zellaufbau (Anabolismus). Durch die Nitrat- und Nitritelimination kann der pH-Wert im Reaktor bis auf Werte um 9.6 steigen. Die pH-Wertsteigerung wird nur teilweise durch Umbildung des in Wasser gelösten $CO_2$ in Karbonate und Hydrogenkarbonate gepuffert und bewirkt eine Erhöhung der dissoziierten organischen Verbindungen. Sofern diese organischen Verbindungen nicht toxisch oder inhibierend auf die Mikroorganismenaktivität wirken, ist aufgrund des vergrößerten Nahrungsangebotes eine höhere Bakterienwachstumsgeschwindigkeit zu erwarten. Als Denitrifikationsstufe können verschiedene Reaktortypen wie z. B. Rührreaktoren, Schlaufenreaktoren, Wirbelschichtreaktoren, Festbettumlaufreaktoren oder Fließbettreaktoren eingesetzt werden. In allen vorgenannten Reaktorarten kann zur Erhöhung der Bakterienverweildauer Trägermaterial eingesetzt werden. Diese Maßnahme ist jedoch nur dann erforderlich, wenn die Generationsrate der Bakterien größer als ihre Verweildauer im Reaktor ist und deshalb die Mikroorganismen aus dem System ausgewaschen werden (Wash-Out). Andere Möglichkeiten der Bakterienrückhaltung in Reaktionssystemen wäre die Biomassenabscheidung nach dem Prinzip der Schwerkraftabscheidung, Zentrifugalabscheidung, Oberflächen- oder Volumenfiltration und anschließender Bakterienschlammrückführung. Die Bakterienschlammrückführung kann mit aerober oder anaerober Schlammstabilisierung gekoppelt sein. Die oben angegebenen Maßnahmen zur Bakterienrückhaltung gelten ebenso für die anderen biologischen Stufen. Da in diesen Hydrolyseprozeßabwässern in den meisten Fällen ein Überangebot an Nitrit und Nitrat gegenüber gelösten organischen Verbindungen vorliegt, ist zur nahezu vollständigen Elimination der anorganischen Stickstoffverbindungen die Zugabe von Cosubstrat in Form von organikahaltigen Abwässern oder Feststoffen erforderlich. Als Cosubstrat finden alle mit Kohlenwasserstoffen belasteten Haushalts- oder Industrieabwässer Verwendung. Des weiteren lassen sich auch Feststoffe (z. B. Naßmüll) oder feststoffhaltige organische Schlämme (z. B. Überschußschlämme aus den Kläranlagen) sowie auch reine organische Verbindungen wie Zucker, reine organische Säuren, Alkohole oder Alkane und Alkanole einsetzen. Dementsprechend sind je nach Einsatzstoff andere Dosiervorrichtungen vorzusehen. Für Feststoffe würden in erster Linie Zellradschleusen oder Excenterschnekkenpumpen angewandt. Für Schlämme kämen ebenfalls Excenterschneckenpumpen zum Einsatz. Für die Dosierung von flüssigen und feststofffreien Cosubstraten werden Kreiselpumpen oder Membranpumpen eingesetzt. Die Dosierung von gasförmigen Cosubstrat, z. B. Methan oder Stadtgas, kann über eine zwischen einer Gasdruckleitung und dem Denitrifikationsreaktor installierten, motorisch oder pneumatisch betriebenen Stellglied erfolgen oder das Gas wird über ein Gebläse eingetragen. Im Anschluß an die anoxisch betriebene biologische Stufe folgt eine aerobe biologische Stufe.

Die Elimination der den Stoffwechselprozeß der Mikroorganismen inhibierenden Stoffe wie Nitrit ermöglicht nun eine weitere biologische Behandlung anderer schwer abbaubarer Substanzen in einem aeroben Bioreaktor, in dem unter Umständen simultan oder in einer weiteren aeroben biologischen Stufe eine Nitrifikation ablaufen kann. Insbesondere die Mineralisierung von wassergefährdenden Stoffen wie Aminoaromaten, die in der vorgeschalteten anoxischen biologischen Stufe entstehen können, oder im Explosivstoff enthaltene Stabilisatoren, die sowohl in der Hydrolyse als auch in der anoxischen biologischen Stufe nicht angegriffen wurden, ist das wichtigste Ziel der Behandlung in der aeroben Biostufe. Da der Abbau dieser Stoffe längere Verweilzeiten im Reaktor erfordert, wird zur Vermeidung einer Überdimensionierung des Reaktors Trägermaterial für Bakterien eingesetzt, das gleichzeitig die organischen Inhaltsstoffe im Reaktor adsorptiv aus dem Prozeßwasser entfernt. Somit wird die Verweildauer dieser Stoffe von der hydraulischen mittleren Verweilzeit entkoppelt. Bei der Nitrifikation erfolgt eine Oxidation des im Prozeßwasser gelösten Ammoniaks bzw. Ammoniums, das bei der Mineralisierung einiger organischer Verbindungen freigesetzt wird. Das Ammoniak wird wie in jeder kommunalen Kläranlage durch die chemolithoautotrophen Mikroorganismen Nitrosomonas und Nitrobacter zu Nitrit und Nitrat unter gleichzeitiger Zehrung des im Prozeßwasser vorliegenden Karbonatpuffers oxidiert. Der Unterschied gegenüber den Verhältnissen in einer Kläranlage liegt in der wesentlich höheren Ammonium- und somit auch Ammoniakkonzentration und somit im weitaus höheren volumenspezifischen Sauerstoffbedarf. Die Sauerstoffversorgung wird entweder über Druckbelüftung oder Injektoren in der Flüssigkeitsumlaufleitung des Bioreaktors gewährleistet. Die Reaktoren werden entweder mit Luft- oder Reinsauerstoff versorgt. Der Einsatz von Reinsauerstoff ist bei Existenz von leicht strippbaren Inhaltsstoffen dem Einsatz von Luftsauerstoff vorzuziehen. Wird aus Kostengründen der Einsatz von Reinsauerstoff vermieden, so kann die Abluft des Bioreaktors über eine Abluftbehandlung geleitet werden. Es ist jedoch in der Regel zu erwarten, daß die strippfähigen Bestandteile bereits zusammen mit dem aus der anoxischen Stufe überschüssigen Stickstoffgas entweichen, sofern sie nicht mikrobiell verwertet worden sind. Für diesen Fall ist das mit Organika beladene Stickstoffgas über eine Abgasreinigungsstufe zu behandeln. Als Abgasreinigungsstufe bieten sich je nach Inhaltsstoffen Gaswäscher (Strahl- , Zentrifugal- oder Rieselfilmwäscher), Adsorptionsstufen unter Normaldruck (Filter mit Adsorbentien wie z. B. A-Koks, Braunkohlenschwelkoks, Kompost), Druckwechseladsorption, Absorptionsstufen (Wäscher mit organischen Absorbentien), Kondensationsstufen (direkte oder indirekte Kondensation), Aerosolabscheidung, chemisorptive Reinigungsstufen (z. B. Eisenoxidfilter), katalytische Nachverbrennung, thermische Nachverbrennung, Biofilter oder eine Verfahrenskombination der vorgenannten Stufen an. Zur Teilreinigung des Abluftstromes bietet sich auch eine vor den oben genannten Reinigungsverfahren geschaltete Behandlung mit Ozon an, sofern das Restozon aus der Abluft aus einer evtl. im Verfahrenskonzept vorzusehnden Ozonisierungsstufe zur Oxidation der organischen Bestandteile genutzt werden soll.

Der anfallende Überschußschlamm aus allen biologischen Stufen wird über bereits gemäß Stand der Technik bekannte Abscheidevorrichtungen dem Prozeßwasser entzogen und aufkonzentriert. Die Aufkonzentration kann wiederum über bekannte Vorrichtungen nach dem Prinzip der Schwerkraftabscheidung, flotativen Abscheidung, Zentrifugalabscheidung, Oberflächen- oder Volumenfiltration sowie der thermischen Trocknung erfolgen. Für die weitere Behandlung der Schlämme sind bereits Verfahren nach den a. R. d. T. vorhanden. Hier kämen Verfahren wie Kompostierung, Pyrolyse oder Verbrennung zum Einsatz. Des weiteren ist zu überlegen, inwieweit sich der Überschußschlamm als Bodenverbesserer in der Land- oder Forstwirtschaft einsetzen läßt, sofern von ihm keine Gefährdung oder Beeinträchtigung für Luft, Wasser oder Boden ausgeht. Auch nach dieser biologischen Behandlung sind evtl. noch Restverschmutzungen im Wasser in Form von gelöster denitrierter Zellulose zu erwarten, die nach Zwischenspeicherung durch eine Trennvorrichtung aufkonzentriert und entweder nach einer aeroben Vergärung in organische Säuren und Alkohole oder sogar nach einer Methanisierungsstufe in Biogas umgewandelt werden. Alle diese Produkte lassen sich in der Denitrifikationsstufe als Cosubstrat einsetzen, um überschüssige Nitrite und Nitrate ebenfalls zu veratmen. Das Biogas kann zusätzlich als Energielieferant dienen. Das Konzentrat kann je nach dem Verwendungszweck auch dem Überschußschlamm beigemengt werden.

Über die Verbrennung von Biogas in einer thermischen Inertgasanlage kann auch Inertgas produziert werden, das als Ergänzung zum Überschußstickstoff aus der anoxischen biologischen Stufe zum Leistungseintrag in den Reaktoren oder als warmes Abgas für eine direkte Beheizung der Verfahrensstufen eingesetzt werden. Die anaerobe Behandlung läßt sich unter Umständen auch ohne vorgeschaltete Aufkonzentrierung der Organika betreiben.

Die hinter der Trennvorrichtung weitgehend von Organika abgereicherte Lösung enthält evtl. noch persistente Organika, die in einer chemischen Oxidationsstufe unter Einsatz der Oxidationsmittel Ozon, NaOCl oder $Cl_2$ sowie $H_2O_2$ in Kombination mit UV-Licht zu leichter abbaubaren organischen und anorganischen Verbindungen umgewandelt werden. Die Verwendung von NaOCl oder $Cl_2$ für die Oxidation sollte aufgrund der zu befürchtenden AOX-Problematik vermieden werden. Nach der oxidativen Behandlung mit Ozon oder $H_2O_2$ werden die Inhaltsstoffe, sofern sie nicht direkt durch die Oxidation mineralisiert wurden, in der nachgeschalteten biologischen Behandlungsstufe abgebaut. Der biologische Abbau erfolgt vorzugsweise in einem Reaktor mit trägerfixierten Bakterien. Die Trägerschicht setzt sich aus einer oberen A-Koksschicht, an der zum Schutz der Mikroorganismen die restlichen im Prozeßwasser gelösten Oxidationsmittel abreagieren, und einer als Siedlungsfläche für Mikroorganismen gedachten Kiesschicht zusammen. Als Sicherheitsstufe kann zur Abtrennung der nicht reagierten organischen Inhaltsstoffe dem Ablauf des Bioreaktors eine Adsorptions- oder Absorptionsstufe nachgeschaltet werden. Der Ablauf kann je nach Salzgehalt vollständig oder als Teilstrom über eine Rücklaufleitung in die Transportleitung zurück in den Zwischenspeicher vor der Hydrolysestufe geführt werden. Die bei der evtl. Regeneration der Harze anfallenden Konzentrate werden wiederum im chemischen Oxidationsreaktor behandelt. Ein Prozeßwasser, das am Ablauf der vorgenannten Verfahrensstufe einen zu hohen Salzgehalt aufweist, kann nach Behandlung durch eine Entsalzungsstrecke wieder für den Hydrolyseprozeß bzw. für die Verdünnung der aus der Hydrolyse anfallenden Lösungen verwendet werden.

Der als Abwasser aus der Anlage ausgeschleuste Teilstrom wird nach Zwischenspeicherung nach einer pH-Kontrolle und einer ggf. erforderlichen pH-Wertkorrektur in den Vorfluter eingeleitet.

Ausführungsbeispiele

Weitere Ausgestaltungen der Erfindung werden anhand von in den Figuren dargestellten Ausführungsbeispielen näher erläutert. Für gleiche Elemente werden dieselben Bezugszeichen verwendet. Es zeigen:

Fig. 1: ein Grundfließbild des erfindungsgemäßen Verfahrens zur chemisch-biologischen Entsorgung von Explosivstoffen und explosivstoffhaltigen Reststoffen

Fig. 2: ein Verfahrensfließbild einer erfindungsgemäßen Anlage zur chemisch-biologischen Entsorgung von Explosivstoffen und explosivstoffhaltigen Reststoffen

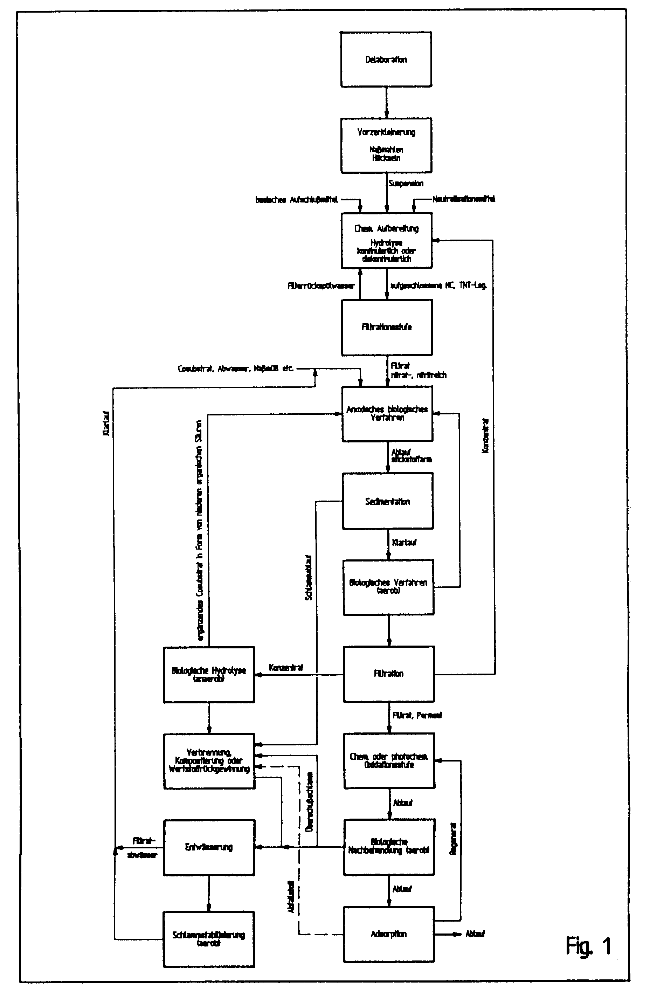

In Fig. 1 wird der Aufbau und das Zusammenwirken der einzelnen Verfahrensstufen einer Anlage zur chemischbiologischen Entsorgung von Explosivstoffen und explosivstoffhaltigen Reststoffen allgemein beschrieben.

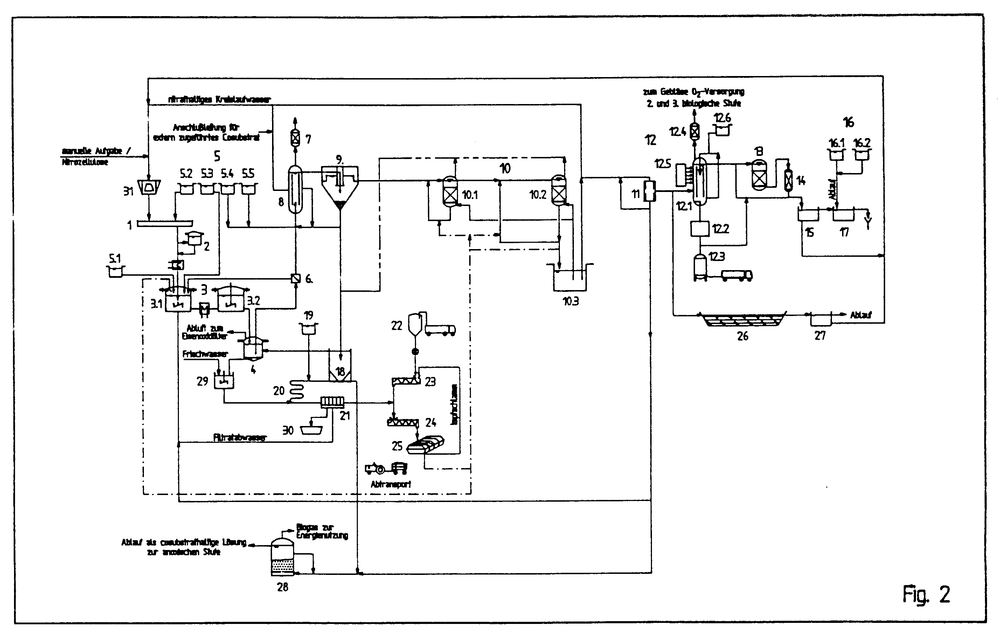

In Fig. 2 werden die wichtigsten einzelnen Verfahrensstufen anhand einer beispielhaften Anlage zur chemisch-biologischen Entsorgung von Explosivstoffen und explosivstoffhaltigen Reststoffen genauer spezifiziert. In Fig. 1 wird beispielsweise von einer Behandlung aus der Delaborierung anfallender Treibmittel ausgegangen. Die Explosivstoffe können jedoch auch aus Altablagerungen stammen oder in einem Prozeßwasser einer Waschanlage für Böden, die mit Explosivstoffen kontaminiert sind, enthalten sein. Als Aggregat für die nachgeschaltete Vorzerkleinerungseinheit ließe sich beispielsweise gemäß Fig. 2 ein Kegelbrecher 31 einsetzen. Die hierbei anfallende wäßrige Suspension wird in diesem Fall durch Zugabe eines basischen Aufschlußmittels, z. B. NaOH 5.1, bei einer Temperatur um 100 °C und Umgebungsdruck behandelt. Es ist jedoch eine Hydrolyse in einem höheren Druck- und Temperaturbereich denkbar, wobei unter Einhaltung von hohen Konzentrationen der Einsatzstoffe ein autothermer Prozeß möglich und eine vollständigere Hydrolyse- und Zersetzungsreaktion zu erwarten ist. Bei einer vollständigen Reaktion läßt sich z. B. die nachgeschaltete Trenneinrichtung als reiner Feinfilter für die Abtrennung der Inertstoffe einsetzen, da die hochmolekularen organischen Verbindungen nicht mehr in ungelöster Form vorliegen und die Standzeit des Filters erhöht wird. Bei höheren Konzentrationen an Inertstoffen wäre auch der Einsatz von Schwerkraftabscheidern denkbar. In Fig. 1 wird bei der hinter der Filtrationsstufe vorgesehenen anoxischen biologischen Behandlung von einer starken Verdünnung der aufgeschlossenen Explosionsstofflösung durch die Zugabe von Cosubstrat ausgegangen. Die erreichte Verdünnung läge im Bereich zwischen 1 : 1 bis hin zu 1 : 400. Eine Nutzung des überschüssigen Stickstoffgases erfolgt nicht.

Das in Fig. 1 skizzierte bevorzugte Verfahren würde gemäß der in Fig. 2 dargestellten Anlage folgendermaßen ablaufen:
Das trocken oder feucht angelieferte Treibmittel wird manuell dem Kreislaufwasser beigemengt, das Treibmittel wird dann in einem Kegelbrecher 31 vorzerkleinert und über einen Transportkanal 1 entweder in einem doppelwandigen Vorratsbehälter 2 aus PE zwischengespeichert oder als Suspension direkt in die kontinuierlich betriebene Hydrolysestufe 3, bestehend aus zwei hintereinander geschalteten Rührreaktoren, geleitet. Die Treibmittel gehen nach Zugabe von NaOH aus der Dosierstation 5.1 bei einer Prozeßtemperatur von 100 °C größtenteils in Lösung oder erfahren eine direkte Zersetzung. Die hierbei freiwerdende Wärmeenergie kann unter der Zielsetzung eines autotherm und kontinuierlich geführten Hydrolyseprozesses für die Aufheizung der zugeführten Treibmittelsuspension verwendet werden. In der nachgeschalteten Zwischenspeicherung 4 läuft ein Nachreifungsprozeß ab. Das hierfür eingesetzte Trichterbecken ist wärmeisoliert. Es ermöglicht des weiteren eine sedimentative Abscheidung der Inertanteile von den organischen Feststoffen. Die Inertanteile werden in einem Rührreaktor 29 nach Frischwasserzugabe einem Waschprozeß unterworfen und nach einer Entwässerung in einer Kammerfilterpresse 21 im Container 30 gesammelt. Das Waschwasser gelangt als Filtratabwasser aus der Kammerfilterpresse zurück in den 1. Hydrolysereaktor 3.1. Das Prozeßwasser aus dem Zwischenspeicher 4 wird über eine Feinfiltration 6 (z. B. Kerzenfilter) bei einem Überdruck um 0,2 bis 4 bar von organischen Feststoffen befreit. Die organischen Feststoffe werden zum 1. Hydrolysereaktor 3.1 zurückgeführt und können nochmals einen Aufschluß unterzogen werden. Das Filtrat erfährt nach Zugabe von Nährsalzen, Spurenelementen als Substratunterstützung und $H_3PO_4$ zur Neutralisation durch die Dosierstationen 5.4,5.5 und 5.3 nach einer weiteren Zugabe von Cosubstrat eine Verdünnung im Verhältnis 1 : 50 zur Ausgangskonzentration. Die verdünnte Lösung wird in einem anoxisch betriebenen Schlaufensuspensionsreaktor 8 denitrifiziert, das dabei anfallende Überschußgas wird in einem Eisenoxidfilter 7 aufbereitet. Die Abscheidung der Biomasse erfolgt mit Hilfe eines herkömmlichen Sedimentationsbeckens 9. Der anfallende Überschußschlamm wird in einem Eindicker 18 aus PE aufkonzentriert und nach Flokkungsmittelzugabe aus der Dosierstation 19 in einem Rohrreaktor 20 einem Flockungsprozeß unterworfen. Der ausgeflockte Schlamm kann nach einer Entwässerung durch die Kammerfilterpresse 21 entweder zusammen mit den Inertanteilen oder allein in die 2. Mischerstufe 24 gefördert und dort mit fertigen Kompost geimpft werden. Anschließend erfolgt eine kontrollierte Vorrotte in belüfteten Sammelcontainern. Ein Teil des fertigen Kompostes wird in die 1. Mischerstufe 23 gefördert und nach Zugabe von Kalk, sofern erforderlich, aus dem Silo 22 wieder zum Animpfen eingesetzt. Das am Klarlauf des Sedimentationsbeckens 9 ablaufende Prozeßwasser wird in einem zweistufigen aeroben biologischen Verfahren 10 weiterbehandelt. Die aerobe biologische Behandlung setzt sich aus zwei in Reihe geschalteten Festbettumlaufreaktoren zusammen, die über die Umlaufwasserleitung mit Luft- oder Reinsauerstoff versorgt werden können. In der 1. aeroben bzw. 2. biologischen Stufe 10.1 erfolgt der Abbau der restlichen niedermolekularen Kohlenwasserstoffverbindungen, die in der anoxischen biologischen Stufe aufgrund ihrer schweren Abbaubarkeit gar nicht oder nur zum Teil eliminiert bzw. nur in andere organische Verbindungen umgewandelt worden sind. In der 2. aeroben Stufe bzw. 3. biologischen Stufe 10.2 wird das Prozeßwasser weitgehend nitrifiziert und erfährt hierdurch einen leichten pH-Wertabfall. Der Ablauf aus der 3. biologischen Stufe wird in einem Zwischenspeicherbecken 10.3 bevorratet. Ein Teil des bevorrateten Prozeßwassers dient zur Rückspülung der Festbettumlaufreaktoren 10.1 und 10.2. Das Rückspülwasser wird zusammen mit dem Überschlamm, wie bereits oben beschrieben, weiterbehandelt. Die gelösten hochmolekularen organischen Verbindungen, wie denitrierte Zellulose, wird über eine Ultrafiltration 11 als Konzentrat allein oder zusammen mit eingedicktem Überschußschlamm in einem anaerob betriebenen Up-Flow-Reaktor 28 zu niedermolekularen Kohlenwasserstoffen umgewandelt. Das aus der Ultrafiltration 11 anfallende Permeat enthält unter Umständen persistente niedermolekulare Organiken, die in einer chemisch oxidativen Behandlungsstufe 12 mineralisiert oder zumindest umgewandelt werden, dergestalt, daß sie sich weiter einer biologischen Behandlung unterziehen lassen. Die chemisch oxidative Behandlungsstufe 12 setzt sich aus einem Schlaufensuspensionsreaktor 12.1 (Ozonreaktor) und einem UV-Reaktor 12.5 zusammen. Die Versorgung mit den Oxidationsmitteln $H_2O_2$ und Ozon erfolgt mit Hilfe einer $H_2O_2$-Dosierstation 12.6 und einem über einen Flüssigsauerstofftank 12.3 versorgten Ozongenerator 12.2. Die Elimination von überschüssigen Restozon aus dem Abgas wird durch einen Ozonvernichter 12.4 erreicht. Die nachträgliche biologische Behandlung erfolgt in einem unbelüfteten Festbettumlaufreaktor 13. Der nach der Ozonbehandlung im Ablauf des Oxidationsreaktors gelöste Sauerstoff reicht für die Sauerstoffversorgung der Mikroorganismen aus. Die weiterhin persistenten Organiken durchlaufen den Festbettumlaufreaktor 13 unbeschadet und werden in der nachgeschalteten Adsorberkolonne 14 vom Prozeßwasser abgeschieden. Die Adsorberkolonne 14 wird gemäß der Darstellung in Fig. 2 nicht regeneriert. Das am Ablauf der Adsorberkolonne 14 austretende Prozeßwasser wird im Prozeßwasserspeicherbecken bevorratet und kann als Kreislaufwasser für den Hydrolyseprozeß bzw. als Verdünnungswasser vor der anoxischen biologischen Stufe dienen. Das überschüssige Wasser wird als Abwasser nach einer pH-Kontrolle 17 in den Vorfluter geleitet. Der pH-wert des Abwassers kann über eine Dosierstation zur pH-Kontrolle 16 entsprechend korrigiert werden.

Alternativ zur Prozeßwasserbehandlung gemäß der Verfahrenskonzeption 12, 13 und 14 bietet sich bei geringerer Verschmutzung des Permeats eine Behandlung in einer Pflanzenklärstufe 26 mit anschließender Bevorratung in einem gesonderten Prozeßwasserspeicherbecken 27 an.

Bezugszeichenaufstellung

| 1 | Transportkanal |
|---|---|
| 2 | Zwischenspeicher |
| 3 | Hydrolysestufen |

3.1     1. Hydrolysestufe
3.2     2. Hydrolysestufe
4       Zwischenspeicher
5       Chemikalien-Dosierstation
5.1     NaOH
5.2     Zellulase
5.3     $H_3PO_4$
5.4     Nährsalz
5.5     Spurenelemente
6       Druckfilter
7       Eisenoxidfilter
8       1. biologische Stufe
9       Sedimentationsbecken
10      Aerobe biologische Behandlungsstufe
10.1    2. biologische Stufe
10.2    3. biologische Stufe
10.3    Zwischenspeicherbecken
11      Ultrafiltration
12      Chemisch oxidative Behandlungsstufe
12.1    Ozonreaktor
12.2    Ozongenerator
12.3    $O_2$-Tank
12.4    Ozonvernichter
12.5    UV
12.6    $H_2O_2$
13      Festbettumlaufreaktor
14      Adsorberkolonne
15      Prozeßwasserspeicherbecken
16      Dosierstation
16.1    HCl
16.2    NaOH
17      pH-Kontrolle
18      Eindicker
19      Polyelektrolyt
20      Rohrflocker
21      Filterpresse
22      Kalksilo
23      1. Mischer
24      2. Mischer
25      Rottecontainer
26      Pflanzenklärstufe
27      Prozeßwasserspeicherbecken
28      anaerobe Vergärungsstufe
29      Inertstoff-Waschvorrichtung
30      Container
31      Vorzerkleinerung

**Patentansprüche**

1.  Verfahren zur kombinierten chemisch-biologischen Entsorgung von Explosivstoffen und explosivstoffhaltigen Reststoffen, gekennzeichnet durch die Schritte:

    a) Lagerung der Explosivstoffe aus der Delaboration oder Überschußproduktion oder der bei einer Sanierung von Rüstungsaltlasten anfallenden explosivstoffhaltigen Reststoffe in einem Speicherbehälter (2) als ein in wäßriger Suspension vorliegendes Explosivstoffgemisch,

    b) Hydrolyse der in der Suspension vorliegenden Inhaltsstoffe nach Zugabe von Säure, Lauge oder Enzymen, Zerlegung der hochmolekularen organischen Stoffe in niedermolekulare organische und anorganische Bestandteile, die in der Prozeßlösung leichter löslich sind und somit in der nachgeschalteten biologischen Stufe effektiver behandelt werden können, wobei die Betriebstemperaturen je nach Betriebsstoff zwischen 30 ° und 374 °C bei einem Druckniveau zwischen 0,2 und 221 bar liegen, Abtrennung kolloidal vorliegender hochmolekularer Hydrolyserestprodukte mit einer entsprechenden Trennvorrichtung, wobei anfallende Konzentrate der Hydrolysestufe (3) wieder zugeführt und Inertstoffe aus dem Prozeß ausgeschleust werden,

    c) die während der Hydrolyse unter Umständen auftretenden Abgase absorptiv, adsorptiv oder chemisorptiv gereinigt werden und die dabei anfallenden Schadstoffkonzentrate in die biologische Behandlungsstufe geleitet werden,

    d) die durch die Hydrolyse entstandenen organischen Verbindungen sowie die infolge der Freisetzung von funktionellen Gruppen in Lösung gegangenen anorganischen Bestandteile wie Nitrit oder Nitrat, nach einer entsprechend vorgegebenen Verdünnung, in einem anoxisch geführten biologischen Abbauprozeß als Substrat und/oder als Sauerstoffquelle für die Mikroorganismen dienen, die Sauerstoffdonatoren Nitrit und Nitrat durch eine enzymatische Reduktion überwiegend in reinen Stickstoff (Denitrifikation) und nur zu einem geringen Anteil in Ammonium oder Ammoniak (Ammonifikation) umgewandelt werden, der hierdurch freigesetzte Sauerstoff den Mikroorganismen zur Oxidation der organischen Inhaltsstoffe in der Prozeßlösung dient, wobei das in diesem biologischen Abbauprozeß entstehende Abgas nahezu frei von toxischen Substanzen (Stickoxide) ist und sich weitgehend aus den Inertgasen $N_2$ und $CO_2$ zusammensetzt,

    e) der Nitrit- und/oder Nitratüberschuß in der Prozeßlösung nach Zugabe von weiteren Trägern von organischen Verbindungen (Cosubstrat) wie

    - kommunales Abwasser,
    - Naßmüll,
    - Überschußschlamm einer kommunalen Kläranlage,
    - Abwässer oder Abfälle aus der Lebensmittelindustrie oder
- organisch belastetes Grundwasser mikrobiell umgesetzt wird,

f) die schwer abbaubaren organischen Inhaltsstoffe, die in der anoxischen biologischen Stufe nicht mikrobiell umgesetzt werden konnten, in einer aeroben biologischen Stufe mineralisiert werden, in der gleichzeitig eine vollständige Nitrifikation erfolgt, und das Prozeßwasser am Ablauf des aerob betriebenen Bioreaktors nahezu kein Nitrit und Ammoniak aufweist,

g) in der nachgeschalteten Vorrichtung die Abtrennung kolloidal vorliegender Biomasse und hochmolekularer Hydrolyserestprodukte sowie deren Rückführung in die vorgenannte Hydrolysestufe oder Behandlung in einer weiteren biologischen anaeroben Vergärungsstufe erfolgt,

h) fotochemische oder rein chemische Behandlung des Ablaufs aus der aeroben biologischen Stufe sowie weitere biologische Nachbehandlung, Abtrennung der persistenten Organika durch eine nachgeschaltete Adsorptions- oder Absorptionsstrecke, Schlammentwässerung des Überschußschlamms aus allen oben genannten biologischen Stufen, Filtratabwasserrückführung zur Entsorgungsanlage und biologische Stabilisierung des teilentwässerten Schlammes oder direkte thermische Weiterbehandlung in einer Pyrolyse oder Verbrennung und

i) Wiederverwendung des Prozeßwassers für die Verdünnung der anfallenden konzentrierten Lösungen aus der Hydrolysestufe.

2. Verfahren nach Anspruch 1, dadurch gekennzeichnet, daß die bei der Hydrolyse frei werdende Wärmeenergie innerhalb der Anlage für die Beheizung anderer Verfahrensstufen genutzt wird.

3. Verfahren nach einem der Ansprüche 1 bis 2, dadurch gekennzeichnet, daß eine nach dem Salzgehalt gesteuerte Prozeßwasserkreislaufführung zur Zwischenspeicherung des Prozeßwassers vorgesehen wird.

4. Verfahren nach einem der Ansprüche 1 bis 3, dadurch gekennzeichnet, daß die anfallenden Konzentrate und Regenerate aus den zur Aufbereitung der Prozeßlösung eingesetzten physikalischen Trennverfahren zwischengelagert und in den biologischen oder chemischen Behandlungsstufen nochmals behandelt werden.

5. Verfahren nach einem der Ansprüche 1 bis 4, dadurch gekennzeichnet, daß das Verfahren in Kombination oder parallel zu einer kommunalen Kläranlage, einer Industriekläranlage oder einer Müllvergärungsanlage betrieben wird.

6. Verfahren nach einem der Ansprüche 1 bis 5, dadurch gekennzeichnet, daß aus einem Einsatzstoff mit hohem Stickstoffmassenanteil ein weitgehend von Stickstoffen befreites organisches Restprodukt hergestellt wird.

7. Verfahren nach einem der Ansprüche 1 bis 6, dadurch gekennzeichnet, daß als Cosubstrat Zucker, Melasse, oder andere Rückstände aus der Lebensmittelindustrie, Naßmüll, kommunales oder organisch verschmutztes Industrieabwasser, mit organischen Verbindungen kontaminiertes Grundwasser und Filtratabwasser aus den kommunalen Kläranlagen eingesetzt werden.

8. Anlage zur Durchführung des Verfahrens zur kombinierten chemisch-biologischen Entsorgung von Explosivstoffen und explosivstoffhaltigen Reststoffen nach einem oder mehreren der Ansprüche 1 bis 7, mit einem Oxidationsreaktor mit nachgeschaltetem Bioreaktor und/oder nachgeschalteter Absorberharzkolonne zur weitgehenden Abreinigung chemisch und biologisch vorbehandelter Schießpulverlösungen, mit mehreren Bioreaktoren zur kombinierten anoxischen, aeroben und/oder anaeroben Behandlung der chemisch hydrolysierten Explosivstoffsuspensionen, mit mehreren parallel und in Reihe schaltbaren Autoklaven als ein ein- oder mehrstufiges Hydrolyseverfahren, dadurch gekennzeichnet, daß eingangsseitig der Explosivstoff und der explosivstoffhaltige Reststoff vorzerkleinert als wäßrige Suspension über eine Transportvorrichtung oder -Leitung (1) nach Zwischenlagerung der Hydrolysestufe (3) zugeführt wird, daß als 1. Hydrolysestufe (3.1) ein Reaktor für einen Betriebsdruck wahlweise von 0,2 bis 221 bar und bei Temperaturen zwischen 30 ° bis 374 °C eingesetzt wird, der nicht hydrolysierte Rückstand über eine Feststofftrennvorrichtung (6) von der wäßrigen Lösung separiert und der Hydrolysestufe wieder zugeführt wird, filtratseitig zur Nitrit- und Nitratelimination ein ein- oder mehrstufiges anoxisches biologisches Verfahren (8) eingesetzt wird, wobei infolge der Denitrifikation eine weitgehende Veratmung der gelösten organischen niedermolekularen Hydrolyseprodukte erfolgt, daß für die einzelnen anoxisch, aerob und anaerob betriebenen Bioreaktoren eine Heizvorrichtung vorgesehen ist, mit der die Betriebstemperaturbereiche zwischen 15 ° bis 65 °C gefahren werden, hinter der anoxischen biologischen Stufe für die Rückhaltung der denitrifizierten Bakterien im Reaktor eine Vorrichtung zur Biomassenseparation (9) vorgesehen ist, daß im Anschluß der klarwasserführende Anteil zur weitgehenden Mineralisation der schwer abbaubaren organischen Inhaltsstoffe einer weiteren aeroben und/oder anaeroben Behandlung in einem Bioreaktor (10) oder mehreren hintereinandergeschalteten Bioreaktoren unterzogen wird, daß im Ablauf der vorgenannten biologischen Stufe im Fall hoher Restkonzentrationen an persistenten oder an nur in den vorgeschalteten Reaktorstufen nicht behandelbaren organischen Substanzen über eine Trennvorrichtung (11) der organische Anteil mit mittlerem und hohem Molekulargewicht nahezu vollständig aus der Prozeßlösung entfernt und als Konzentrat entweder in die Hydrolysestufe (3) zurückführt oder nach einer biologischen Vergärung (28) zu niedermolekularen Verbindungen als Cosubstrat in die anoxische biologische Stufe (8) zurückgeführt wird und der von Organika abgereicherte Teil nach weiterer Behandlung zur Ausschleusung als Abwasser aus dem Prozeß vorgesehen ist.

9. Anlage nach Anspruch 8, dadurch gekennzeichnet, daß eingangsseitig zum Hydrolysereaktor zur Ergänzung der Suspension eine oder mehrere Dosiervorrichtungen (5) für Laugen, Säuren und Enzyme einschließlich der entsprechenden Bevorratung vorgesehen sind.

10. Anlage nach einem der Ansprüche 8 und 9, dadurch gekennzeichnet, daß die Steuerung des für den Hydrolyseprozeß optimalen Stoffaustausches leistungseintragsreguliert über eine entsprechende mechanische Mischvorrichtung sowie die Massenstromregulierung des Einsatzstoffes durch Temperaturmessung erfolgt.

11. Anlage nach einem der Ansprüche 8 bis 10, dadurch gekennzeichnet, daß jeder einzelne Hydrolysereaktor zur Prozeßoptimierung in einem anderen Druck-, Temperatur- und pH-Wertbereich fahrbar ist und eine entsprechende Wärmezufuhr oder -abfuhr durch Wärmetauscher oder eine Heizvorrichtung erfolgt und die Abwärme für das Inertstoffwaschwasser nutzbar ist.

12. Anlage nach einem der Ansprüche 8 bis 11, dadurch gekennzeichnet, daß eine Feststofftrennvorrichtung (6) für die nicht hydrolysierbaren Anteile (Hydrolyserückstand) in der letzten Hydrolysestufe (3), auf der der Hydrolyserückstand ausgeschleust wird, vorgesehen ist.

13. Anlage nach einem der Ansprüche 8 bis 12, dadurch gekennzeichnet, daß für den Hydrolyserückstand eine gesonderte Waschvorrichtung (29) mit Ableitung der Waschwässer in die anoxische oder aerobe biologische Stufe oder in die Hydrolysestufe (3) vorgesehen ist.

14. Anlage nach einem der Ansprüche 8 bis 13, dadurch gekennzeichnet, daß zwischen der Hydrolysestufe (3) und der anoxischen biologischen Stufe (8) ein Vorratsbehälter (4) zur Zwischenspeicherung der aufgeschlossenen Explosivstoffe und/oder explosivstoffhaltigen Reststoffe vorgesehen ist.

15. Anlage nach einem der Ansprüche 8 oder 13 und 14, dadurch gekennzeichnet, daß in dem Denitrifikationsreaktor (8) zur Gewährleistung einer nahezu vollständigen Nitrit- und Nitratelimination eine Dosiervorrichtung für unterstützendes Cosubstrat vorgesehen ist.

16. Anlage nach Anspruch 15, dadurch gekennzeichnet, daß für mindestens eines der Cosubstrate eine entsprechende Dosiervorrichtung vorgesehen ist.

17. Anlage nach einem der Ansprüche 8 oder 13 bis 16, dadurch gekennzeichnet, daß der Leistungseintrag für die Durchmischung in dem Reaktor der anoxischen Stufe (8) über Flüssigkeitsumlauf oder Einblasen des Überschußstickstoffes aus der Denitrifikation erfolgt und für das überschüssige Stickstoffgas eine Zwischenspeicherung in einem gesonderten Behältnis vorgesehen ist.

18. Anlage nach einem der Ansprüche 8 oder 13 bis 17, dadurch gekennzeichnet, daß in dem aeroben Bioreaktor (10) neben einer Mineralisierung der restlichen organischen Inhaltsstoffe eine weitgehende Nitrifikation erfolgt und ein nitratreicher Ablaufteilstrom durch Kreislaufführung der vorgeschalteten anoxisch betriebenen Stufe als gasfreie Sauerstoffversorgung vorgesehen ist.

19. Anlage nach einem der Ansprüche 8 oder 13 bis 18, dadurch gekennzeichnet, daß für alle Bioreaktoren jeweils Dosiervorrichtungen für Spurenelemente und Nährsalze und mechanische Vorrichtungen zur Schaumbekämpfung vorgesehen sind.

20. Anlage nach einem der Ansprüche 8 oder 13 bis 19, dadurch gekennzeichnet, daß zur weiteren Behandlung des anfallenden Abwassers ein chemischer Oxidationsreaktor (12), der einer Umwandlung oder Mineralisation niedermolekularer persistenter Organika und Anorganika dient, vorgesehen ist.

21. Anlage nach einem der Ansprüche 8 oder 13 bis 20, dadurch gekennzeichnet, daß für die entstehenden Restprodukte im Abwasser eine biologische Nachbehandlung in einem Biofestbettumlaufreaktor (13) erfolgt und als Sicherheitsstufe eine Adsorptions- oder Absorptionsstrecke (14) vorgesehen ist.

22. Anlage nach einem der Ansprüche 8 oder 13 bis 21, dadurch gekennzeichnet, daß für Abwasser mit hohem Salzgehalt eine Umkehrosmosestufe, bei der das Konzentratvolumen über eine nachgeschaltete ein- oder mehrstufige Verdampferanlage auf das Feststoffvolumen reduziert und das Permeat sowie das Brüdenkondensat als Prozeßwasser der Hydrolysestufe (3) zurückgeführt wird, vorgesehen ist.

23. Anlage nach Anspruch 20, dadurch gekennzeichnet, daß neben der Abwasserreinigungsvorrichtung ein Pflanzenklärverfahren (26) als Restreinigungsstufe vorgesehen ist.

24. Anlage nach einem der Ansprüche 20 und 21, dadurch gekennzeichnet, daß zur Zwischenspeicherung der in der Adsorptions- oder Absorptionsstufe (14) anfallenden Regenerate ein Regeneratbehälter, in den die Regenerate über eine Rücklaufleitung eingeleitet werden und durchflußkontrolliert über den Hauptvolumenstrom der chemischen Oxidationsstufe (12) zugeführt werden, vorgesehen ist.

25. Anlage nach Anspruch 20, dadurch gekennzeichnet, daß der Leistungseintrag im chemischen Oxidationsreaktor (12) mit Hilfe der durch die Kreislaufpumpe erfolgten Umwälzung erreicht wird wobei in der Umlaufleitung eine Dosierung des Oxidationsmittels (Ozon, $H_2O_2$) oder die Umwälzung direkt durch Eintrag ozonhaltiger Luft oder ozonhaltigen Sauerstoffgases erfolgt.

26. Anlage nach einem der Ansprüche 8 bis 21, dadurch gekennzeichnet, daß zwischen dem Ablauf des aeroben Bioreaktors und einer nachgeschalteten chemischen Oxidationsstufe (12) zur Rückhaltung der kolloidal gelösten Wasserinhaltsstoffe eine Filtrationsvorrichtung (11), deren filtratseitiger Ablauf zur feststofffreien Behandlung im Oxidationsreaktor (12) zugeführt wird, vorgesehen ist.

27. Anlage nach einem der Ansprüche 8 bis 20 und 25, dadurch gekennzeichnet, daß zur direkten Rückführung des konzentratseitigen Ablaufes aus der Filtrationseinrichtung (11) in die Hydrolysestufe (3) eine Rücklaufleitung vorgesehen ist.

28. Anlage nach einem der Ansprüche 8 bis 10 oder 25 bis 26 dadurch gekennzeichnet, daß die hochmolekularen organischen Anteile im konzentratseitigen Ablauf der Filtrationseinrichtung (11) durch einen anaeroben Bioreaktor (28) im mesophilen oder thermophilen Temperaturbereich weiterbehandelt werden, wobei die entstehenden niedermolekularen organischen Bestandteile in Form von Biogas zur Energienutzung oder als Cosubstrat zur Versorgung des anoxisch betriebenen Bioreaktors einsetzbar sind.

29. Anlage nach einem der Ansprüche 8 bis 28, gekennzeichnet durch
    a) eine Vorzerkleinerungsvorrichtung (31) zur Behandlung der grobteiligen Explosivstoffe und explosivstoffhaltigen Reststoffe zur Vergrößerung der reaktiven Oberfläche,
    b) einen oder mehrere nachgeschaltete Autoklaven, in denen im Temperaturbereich zwischen 30 ° bis 374 °C und einem Druckbereich zwischen 0,2 bis 221 bar nach Zugabe von Lauge oder Säure ein Aufschluß (Hydrolyse) und zum Teil eine Umwandlung der Explosivstoffe und explosivstoffhaltigen Reststoffe in andere niedermolekulare organische und anorganische Bestandteile erreicht wird,
    c) eine nachgeschaltete Feststofftrennvorrichtung (6) zur Rückführung der nicht hydrolysierten Bestandteile in die Hydrolysestufe (3),
    d) eine nachgeschaltete Einheit zur biologischen Behandlung, bestehend aus im mesophilen Temperaturbereich anoxisch betriebenen Bioreaktoren (8), einer Vorrichtung zur Biomassenseparation (9) und im mesophilen Temperaturbereich aerob oder anaerob betriebener Bioreaktoren (10),
    e) eine nachgeschaltete Trennvorrichtung für die nicht biologisch abgebauten hochmolekularen organischen Anteile aus dem Prozeßwasser,
    f) einen filtratseitig nachgeschalteten Oxidationsreaktor (12) für die chemisch oxidative Behandlung der niedermolekularen persistenten Organika,
    g) einen dem Oxidationsreaktor (12) nachgeschalteten Bioreaktor (13) zur mikrobiellen Nachbehandlung des chemisch vorbehandelten Filtrats,

h) eine daran anschließende Adsorptions- oder Absorptionsvorrichtung (14) zur Elimination der restlichen organischen Bestandteile aus dem Ablauf des Bioreaktors,

i) eine Rücklaufleitung für die weitere Nutzung des Ablaufwassers der Adsorptions- oder Absorptionskolonne als Prozeß- und Transportwasser,

j) eine pH-Kontrollvorrichtung (17) für das Abwasser vor Ableitung in den Vorfluter,

k) einen konzentratseitig nachgeschalteten anaeroben Bioreaktor (28), der zur weitgehenden Vergärung der hochmolekularen organischen Bestandteile im mesophilen oder thermophilen Temperaturbereich eingesetzt wird und

l) eine schlammseitig nachgeschaltete Behandlung des bei der biologischen Behandlung anfallenden Überschußschlamms, bestehend aus Schlammentwässerung (21) sowie Aufbereitung und Kompostierung (22 - 25) oder Verbrennung.

30. Anlage nach einem der Ansprüche 8 bis 29, dadurch gekennzeichnet, daß bei einer $H_2S$-Bildung im Reaktor die in der Denitrifikationsstufe anfallenden Abgase zur Sicherheit direkt oder über einen Eisenoxidfilter in den aeroben Bioreaktor geführt werden, wobei der Eisenoxidfilter im Bypass geschaltet ist.

31. Verwendung der nach dem Verfahren gemäß Anspruch 1 bis 7 und der Anlage gemäß Anspruch 8 bis 30 hergestellten stickstoffarmen Überschußschlämme und der restlichen hochmolekularen organischen Inhaltsstoffe des Prozeßwassers

   - als Bodenverbesserer oder Kompostzusatz für die Land- oder Forstwirtschaft nach einer Stabilisierung und einer mechanischen Entwässerung oder thermischen Trocknung,
   - als energielieferndes stickstoffarmes Brennmaterial für Kraft- oder Heizwerke,
   - als energielieferndes Biogas nach einer Behandlung in einer anaeroben Vergärungsstufe oder
   - als für die Denitrifikationsstufe (8) nutzbares Cosubstrat in Form von niedermolekularen organischen Verbindungen nach einer Behandlung in einer anaeroben Vergärungsstufe, sowie des anfallenden Graphits als energielieferndes stickstoffarmes Brennmaterial für Kraft- oder Heizwerke.

Fig. 1

Fig. 2

18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 338 478 (DYNAMIT NOBEL)<br>--- | | A62D3/00 |
| A | US-A-4 018 676 (J.C.HOFFSOMMER)<br>--- | | |
| A | DE-A-3 711 598 (IBL)<br>--- | | |
| A | FR-A-2 644 782 (J.P.FLAMBEAU)<br>--- | | |
| A | 2414 NAVY TECHNICAL DISCLOSURE BULLETIN.  CAT. NO.1251,  NAVY CASE NO.68,162<br>Bd. 11, September 1985, ARLINGTON,VIRGINIA USA<br>Seiten 57 - 59; 'decontamination composition for nitrate esters'<br><br>----- | | |
| | | | **RECHERCHIERTE SACHGEBIETE (Int. Cl.5 )**<br><br>A62D |

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | DALKAFOUKI A. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
    Dokument